# EUROPEAN PATENT APPLICATION

(11) **EP 4 009 206 A1**
(43) Date of publication of application: **08.06.2022**
(21) Application number: 21211833.5
(22) Date of filing: 01.12.2021
(51) Int. Cl.: G06F 21/32, G06F 21/62, G10L 17/22, G10L 17/24, G10L 15/08, G06F 3/16

(54) **SYSTEM AND METHOD FOR AUTHENTICATING A USER BY VOICE TO GRANT ACCESS TO DATA**

(30) Priority: 01.12.2020 US 202017108724
(71) Applicant: SoundHound, Inc., Santa Clara, CA 95054 (US)
(72) Inventor: MOHAJER, Keyvan, Santa Clara, 95054 (US); HEIT, Warren S., Santa Clara, 95054 (US)
(74) Representative: Smith, Jeremy Robert

(57) **Abstract**

A system and method are disclosed for authenticating a user by voice Devices from various different systems can link to a voice verification system (WS). Users can also enroll with the VSS so that the VSS can provide authentication of users by personal wake phrases, and can grant access to one or more third-parties to at least a portion of the user's personal data. Thereafter users can access their PEKD from un-owned devices by speaking their wake phrase.

## Description

### Background

Voice as a human-machine interface is taking off. Various large companies offer voice virtual assistants such as Google Assistant, Amazon Alexa, Apple Siri, Microsoft Cortana, SoundHound Hound, 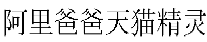 , 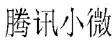 , 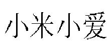 , 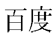 DuerOS, 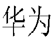 Celia, Samsung Bixby, Naver Clova, and Mycroft. Many of those assistants can control embedded systems (IoT devices). With each one, users must create an account. After doing so, the user can engage with the virtual assistant and the devices that it can control. Those constitute a proprietary ecosystem controlled by the voice assistant. The company providing the voice assistant uses information about the user while creating the account and data gathered from their use to provide useful functions and services. However, each company captures, within its ecosystem, users' personal information. Users cannot benefit from improved services of another company without recreating a new account and providing personal information all over again. That benefits incumbent providers while blocking innovative, disruptive companies that may offer useful new services but for the hurdle to users of moving between service providers. All of that is to the disadvantage of consumers.

### Summary

The following specification describes a verification system involving storage of wake phrases uniquely associated with Personal Extension Knowledge/Preference Database (PEKD) and enrolled signatures, reception of speech audio, recognition of unique wake phrases in the speech audio, extraction of signatures from the speech audio, comparison of extracted signatures to enrolled signatures associated with unique wake phrases to authenticate users, and allowance of users to access the associated PEKDs.

Such a system may store PEKDs in user-owned devices, in a public distributed ledger, by service providers allowing third-party access, or in other appropriate databases.

Recognition and authentication of users can be by phrase-independent automatic speech recognition. One way that this is possible is by extraction and computation of a voice feature vector using a trained model. The feature vectors may be within a learned embedding space. In such a case, comparison of a received vector to a user-profile stored vector may be done by computing a distance between the vectors. Another approach is to use a phrase spotter trained on wake phrases. Voice authentication can be phrase-dependent based on the unique wake phrase or phrase independent based on the speaking of other words.

The specification also describes a method of user authentication that involves receiving personal data from a user, receiving a request from a service provider to access the data, requesting authorization from the user, receiving a response from the user, and providing, to the service provider, access to a copy of the data conditioned on the response.

Such authentication can also involve storing an enrollment biometric signature, comparing it with a biometric signature in the request, and conditioning the response on the similarity between the signatures. That biometric signature can be a feature vector in a machine-learned embedding space, and the similarity can be computed as the distance between the vectors. Though many types of biometrics are possible, one way is to extract the signature from speech audio.

The specification also describes a computer-implemented method of database management that involves receiving, from a client device, an API request for a database operation on PEKD, wherein the request was initiated by a user of the client device, determining, from the request a portion of the user's personal data to access, the type of data to delete or get, determining, from the type of data, an appropriate server that stores that type of data, and sending an operation request to the appropriate server, receiving a response from the server, and sending a response to the device.

For such a method, the responses can be DELETE confirmations, GET responses that include the PEKD, or other types. Access to the database for management can involve auth proxy authorization for the request, which can use a mutual authentication protocol. The database operation requests can be sent to a Kafka queue. Furthermore, database requests may be distributed to a plurality of MapReduce clusters.

### Description of the Drawings

FIG. 1 shows a virtual assistant ecosystem.
FIG. 2 shows a block diagram of a virtual assistant ecosystem.
FIG. 3 shows a user interaction with a hotel room virtual assistant.
FIG. 4 shows devices authenticating a user by voice verification.
FIG. 5 shows a method of enrolling a user in a voice verification system.
FIG. 6 shows voice fingerprinting.
FIG. 7 shows a diagram of voice authentication by voice fingerprint
FIG. 8 shows voice interaction with a point of sale device.
FIG. 9 shows a method of enrolling a user for double authentication.
FIG. 10 shows a method of verification by phrase-independent voice fingerprint.
FIG. 11 shows a method of verification by voice variation detection.
FIG. 12 shows voice interaction with a vending machine.
FIG. 13 shows voice interaction with a building security system.
FIG. 14 shows voice verification with edge processing.
FIG. 15 shows a virtual assistant platform with authenticated data access.
FIG. 16 shows a virtual assistant platform with authenticated access and request queueing.
FIG. 17A shows a non-transitory computer-readable medium.
FIG. 17B shows another type of non-transitory computer-readable medium.
FIG. 18A shows a system-on-chip.
FIG. 18B shows a block diagram of a system-on-chip.
FIG. 19A shows a rack server.
FIG. 19B shows a block diagram of a server.

### Detailed Description

The following describes systems of process steps and systems of machines and components for achieving interoperability through interconnected voice verification systems. Some implementations use computers that execute software instructions stored on non-transitory computer readable media. Examples below show design choices for various aspects of such systems. In general, design choices for different aspects are independent and can work together in any combination.

### PEKDs

A Personal Extension Knowledge/Preference Database (PEKD) is a type of personal database. It helps to extend an individual's personal knowledge/intelligence/preferences/consciousness. PEKDs are stored and maintained by personal data service providers. A user can use voice and other inputs to build and access a PEKD and portions of personal data that it stores.

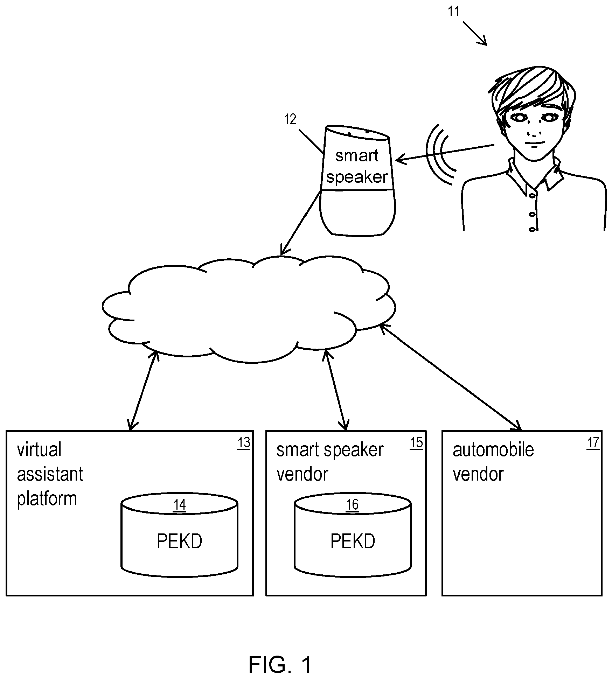

FIG. 1 shows an example system for achieving interoperability by using an interconnected system of user PEKDs. A user 11 uses voice to invoke a smart speaker 12, interact with it, control it, and use it to control other compatible devices. The smart speaker communicates through a cloud network, such as the Internet, with a virtual assistant platform 13. It may perform speech recognition, natural language understanding, request information or actions through web APIs, and provide responses to the smart speaker. The virtual assistant platform stores PEKD information 14, and uses it to provide responses and access information and actions appropriate for the user. In some systems, a single company offers both virtual assistant platforms and smart speakers. However, in the system shown, the smart speaker 12 can also communicate with a separate company 15 that offers smart speakers. The smart speaker vendor may also store PEKD information 16 and use it to provide services or additional functionality to the smart speaker. The smart speaker may also communicate with the providers of third-party devices and services, which may operate independently of the virtual assistant platform and smart speaker vendor. Such providers are generally commercial providers of goods and services. Some such third parties do not store PEKD information for reasons such as ensuring user privacy or simply because they do not need to. Many types of consumer devices can be part of such an open ecosystem 17, including for example smartphones, home appliances, or automobile vendors. Such a system allows different companies to have access to at least a portion of the PEKD information that they need while a user is free to access various devices and services as they wish.

In some systems, PEKDs are stored and maintained in a distributed ledger, such as a blockchain independent of voice service providers, virtual assistant platforms, or device vendors. Such systems can encrypt PEKD database records using user-specific information such as a password, passphrase, bioauthentication such as fingerprint, retina, voice fingerprint, etc. Authentication for access to such database records can be multi-factored, as required for data security. The distributed ledger can be private or public. It can support permissions such as reading, adding, modifying, and deleting. It can support even more complex permissions on all or a portion of the PEKD data. Such distribution makes data available to any service provider, including innovative disruptors. It also avoids data corruption and provides resistance to hacking.

Some systems can store or share PEKD records in one or more datatype-dependent standard formats that are freely transportable between platforms and devices. Such portability has the benefit of avoiding incompatibility and lock-in to ecosystems such as ones today maintained by Amazon, Google, SoundHound, 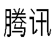 , etc.

### PEKD data types

A PEKD database contains records with information about users of voice-based or other computer services. Some such information includes name, age, gender, home address or region, and region of birth, which are useful for matching users to different types. Another type of PEKD information is shopping preferences, which are helpful for product recommendations and targeted advertising. Such information may be treated as or transformed into a vector in a PEKD embedding space. Such a vector is useful because it allows the system to compute distances between users, clustering of users by computing centroids or using density-based algorithms such as DBSCAN, and mapping of likely interests to any given user. These approaches allow better targeting by advertisers and sellers and also more relevant search results for users.

Another type of PEKD information is lists of pointers to entities with specific names and semantic meanings. For example, a user's contact list contains pointers to records in a database of other people. These may be private to the user. However, contacts may be identifiably linked to other users by unambiguous user attributes such as an email address or phone number. Another example of such a list is a list of previously purchased or previously viewed products or URLs. Lists of pointers to other entities with specific names and semantic meanings allow speech recognition to recognize those names when spoken and improve accuracy by distinguishing names from standard words with similar pronunciations that would otherwise speech recognition would otherwise recognize as the word with the standard pronunciation. Pointers between corresponding users or between users and other types of entities allow for connection-based clustering. Improved clustering provides better targeting and more relevant search results.

### Ecosystems

Companies such as Google, with its Nest home control and other third-party devices, and Amazon, with its Ring home security and other third-party devices, create proprietary, closed ecosystems with user data capture. With these closed ecosystems, disruptive innovators are unable to allow their products/services and their partners to develop voice assistants that can control the ecosystem products developed by Amazon or Google. This benefits their companies while disadvantaging users. Other companies, such as SoundHound, provide ecosystems to support any number of third parties without mandatory data capture agreements.

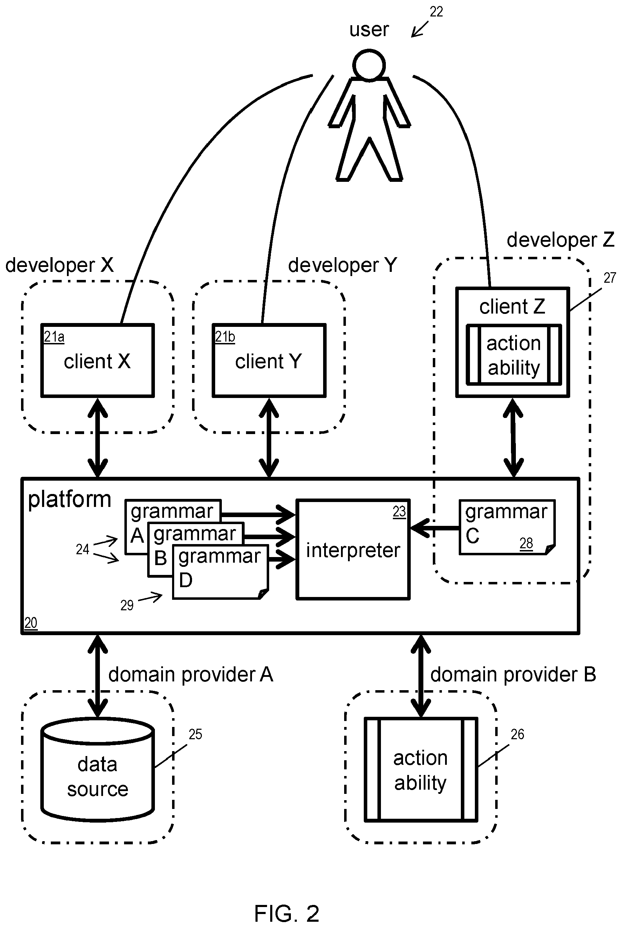

FIG. 2 shows further detail of an example of an ecosystem open to third parties. A platform 20 supports multiple clients 21a and 21b. The platform can run in a cloud computing environment, such as ones typically found in data centers or corporate central offices. The clients may be stationary home devices such as smart speakers, portable devices such as phones and wearables including apps that run on such devices, other mobile devices such as automobiles and other transportation systems, purchasing systems such as vending machines, point-of-sale (POS) terminals, or drive-through restaurant ordering systems.

Client devices may be owned by their users such as home smart speakers and mobile phones, but client devices may also be public such as a point-of-sale terminal or used privately by different users at different times such as a smart speaker within a hotel room. The owners of public or shared devices, such as hotels, and retail operators such as grocery stores and fast food restaurants may contract with a platform provider. To enable users of public and shared clients to access provided commercial services, it helps to associate the user's ID with their PEKD, if they have one. Association can be by a unique identifier such as an email address or credit card, by biometrics such as voice fingerprinting or facial recognition, or by recitation of an identifying phrase, as discussed below. When a new user encounters a public or shared device connected to a platform with which the user has never enrolled, the system may perform an enrollment process immediately. This can involve steps such as requesting uniquely identifying information, requesting a password, requesting a unique phrase, capturing biometric information, or other procedures described below. However, to avoid delaying a user while pressed for time and requesting personal information in a public setting, a system may create a provisional account of the user. The provisional account may allow certain non-critical functions such as requesting a hotel room service or fast food restaurant menu. The provisional account may or may not allow more critical functions such as making high-priced purchases. In some cases, low-priced purchases may be authorized on provisional credit. To avoid people abusing such offerings by purchasing large numbers of small purchases from voice enabled point-of-sale clients, a system may receive a client location identifier such as a serial number associated with a location. The system may alternatively receive geographic information from the point-of-sale device such as a latitude and longitude. To prevent abuse, the system may store a rough voice print and geographic information of voices of users making purchases on provisional credit and reject multiple requests within a short period of time from a nearby location having roughly similar voice characteristics.

The platform receives voice queries or commands from clients, performs speech recognition to transcribe the words spoken, and then interprets the words with a natural language understanding (NLU) interpreter 23. The interpreter performs NLU by comparing words to grammars 24. Grammars correspond to specific domains of conversation and define intents of the spoken words, including different common phrasings for such intents. The system represents intents as data structures stored in memory. Processors may pass data structures between each other. Also, platforms and clients may pass data structures between each other. Formats such as eXtensible Markup Language (XML) or JavaScript Object Notation (JSON) can be appropriate for representing intent data structures.

The platform uses the intents to choose data sources 25 that are appropriate to a grammar's domain. The platform then looks up information from the desired domain provider as needed to respond to queries. Many kinds of data sources are possible such as a lookup of information in an encyclopedia such as Wikipedia, checking a weather forecast from a source such as Weather Underground, and finding a restaurant recommendation from a provider such as Yelp. For commands, the platform uses the intents to invoke an appropriate action ability 26. Many kinds of actions are possible such as sending a short message service (SMS) text message, requesting a ride from a provider such as Uber, or turning on a smart light switch.

Some specialized clients 27 may have a proprietary action ability. For example, an automobile such as one from Mercedes may be able to enable the heater or air conditioner. Such a device may have a specialized grammar 28 to recognize spoken commands. The platform, upon receiving a spoken command for such a client, interprets it and sends an appropriate message in an agreed data structure format to the client.

A platform may also have specialized grammars 29 that are not associated with any particular data source or clients. For example, the platform can provide ability to tell the time, perform arithmetic, or convert between units internally. Platforms can even use the results of one partial intent to inform another. For example, a user voice query for the current temperature in Death Valley in degrees Kelvin requires a weather domain lookup, followed by a unit conversion of the result.

A platform that is open to third-party client developers and third-party data sources enables innovative providers of either to benefit from others. The result is a virtuous cycle of improved capabilities available to users, improved sales of devices due to an improved user experience, and a greater opportunity to monetize data for data source providers due to greater usage of the platform.

### Hotel scenario

The wake phrase that invokes a voice assistant gives it a perceived identity. In a closed ecosystem, all devices and services can only be accessed through a single assistant identity, accessible through a phrase such as "OK Google", "Alexa", of " 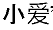 ". Having a single provider-defined identity makes users perceive the device to be the assistant.

In an open ecosystem, wake phrases can be specific to users. They can invoke the assistant through any device in any location by speaking their personal wake phrase. This universality makes the user perceive their assistant as being ambient wherever they are, like an omniscient, omnipotent guardian angel.

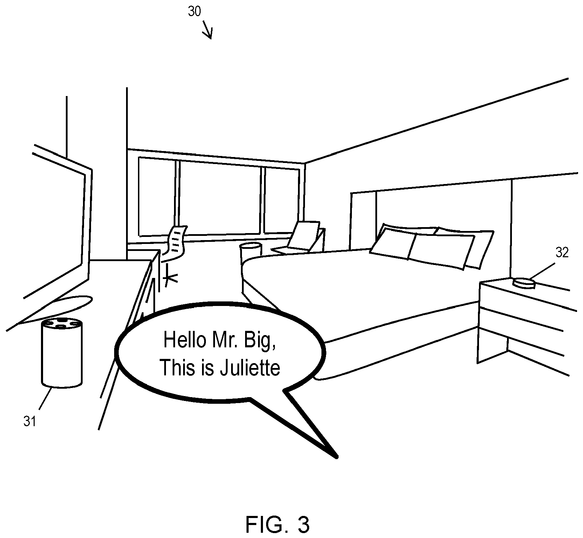

As shown in FIG. 3, with this approach, for example, a hotel guest can say her personal wake phrase -- for example, "Hello Mr. Big, This is Juliette". A smart speaker in the room can recognize the wake phrase and recognize and verify that Juliette stated the wake phrase. At that point, the smart speaker can grant Juliette access to her PEKD information and immediately know that Juliette's favorite music is country music, and Juliette has an appointment tomorrow at 2 pm and who are the people on Juliette's contact list. With this information, the smart speaker can enable Juliette to control products with her voice in the ecosystem, regardless of the product maker.

This makes it so that a user encountering a device that they have not used before, for example, hotel guest entering a hotel room with a smart speaker, need not determine what provider service (e.g. Amazon Alexa, Google Assistant, 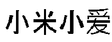 ) serves the device to be able to voice a wake phrase to wake up the device. This provides a more personalized user experience.

### VVS

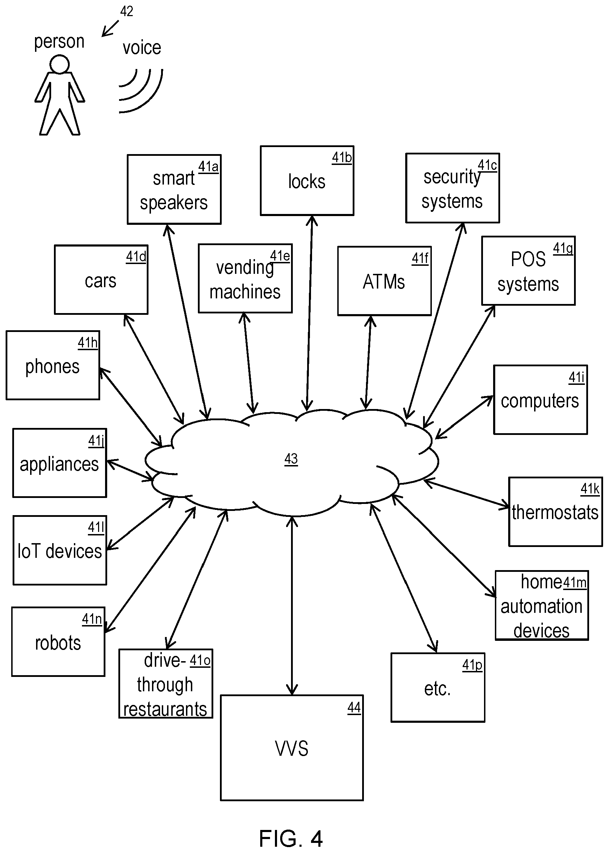

A voice verification system or voice verification server (VVS) can provide authentication of users by personal wake phrases. Such a system receives speech audio, identifies users' unique wake phrases, and verifies their identity for whatever device is requesting authentication. The VVS responds to the device with an authentication message. FIG. 4 shows an example of different kinds of devices using a WS. A smart speaker 41a, lock 41b, security system41c, cars such as a rental car 41d, vending machine 41e, ATM 41f, POS system 41g, phone 41h, computer 41i, appliance 41j, thermostat 41k, IoT device 411, home automation device 41m, robot 41n, drive-through restaurant 41o, etc. 41p, can receive voice queries and commands from a person 42. The voice-powered devices connect through the Internet 43 to a singular centralized voice verification system 44. Having a coordinated system provides a consistent protocol and source for device makers, which improves development time and effort. It also provides a consistent authentication experience for users, which increases user satisfaction and demand for voice-enabled devices.

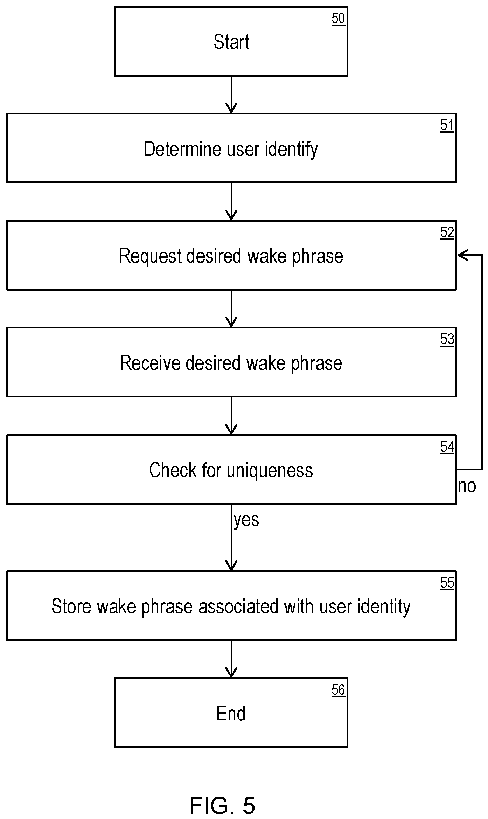

To be able to be verified, users must enroll in the VVS 44. FIG. 5 shows one possible method of enrollment. It starts 50 by determining a user identity 51. Determining the identity may be done by a user entering their email address by a keyboard, but a user may provide identification information by other methods, including speaking their government identification number, or by a user scanning a badge with an optical or magnetic scanner. Next, the system requests, from the new user, their desired wake phrase 52. The system then receives the user's desired wake phrase 53, such as "Hello Mr. Big, This is Juliette". Receiving the wake phrase can be by a text input method such as typing or a speech input method such as automatic speech recognition (ASR). The VVS stores a database of users' personal wake phrases. It proceeds to search for the user's desired wake phrase in the database to confirm that it cannot be found and is, therefore, a unique wake phrase 54. If not, the VVS returns to the step of requesting a desired wake phrase 52. If the wake phrase is unique, the VVS proceeds to store the wake phrase in association with the user identity in a database 55. That completes wake phrase enrollment 56.

By ensuring that each wake phrase is unique to an individual, they will be able to invoke their assistant from any location and any device. This enables the interoperability between devices, voice platforms, and data and service providers. That, in turn, creates new opportunities for participants in the ecosystem.

When a user says their personal wake phrase to a device in communication with the WS, the device transmits the wake phrase to the VVS. The VVS uses the wake phrase to determine and verify the identity of the user and provide access to the user's individual PEKD information. This provides authentication that allows the user to control voice-controlled products in their vicinity using their voice regardless of who developed the device.

So, returning to the hotel example, the hotel smart speaker is connected to the VVS. When the hotel guest enters the room and utters, "Hello Mr. Big, This is Juliette", the smart speaker transmits the wake phrase to the VVS. The VVS receives the wake phrase, "Hello Mr. Big. This is Juliette." The VVS uses the wake phrase to determine and verify the identity of the user. Upon determination and verification of the user, the VVS will allow the connection of the user to their PEKD. The hotel guest can control voice-controlled products using their voice, regardless of who developed the product.

### Wake phrase prefixes

General large vocabulary speech recognition has a lower accuracy than a phrase spotter trained for a specific word or phrase. Furthermore, being able to detect anybody's unique wake phrases requires continually sending text or audio from devices to the VVS, which would require tremendous bandwidth demands to support a large ecosystem.

A VVS or specific devices can require a prefix word or phrase such as the word "Computer... ". Requiring a prefix word allows devices to run simple phrase spotters on the prefix without performing full-vocabulary continuous ASR. Avoiding the need for continuous ASR tremendously reduces the cost of network bandwidth at the VVS. It also enables power-sensitive devices to use much less power, thereby extending battery life and user experience. It also allows cost-sensitive devices to use lower-cost processors since phrase spotters are much less processor-intensive than always-on ASR.

### ASR personalization

A voice-based ecosystem depends on the ASR conversion of speech audio to text or other formats that can be interpreted by programs or natural language understanding models. The more accurate ASR is, the better the user experience and the greater the product adoption. ASR generally uses an acoustic model to convert speech audio into phonetic information and a language model to convert phonetic information into words or other linguistic tokens. It is also possible to train end-to-end ASR that merges acoustic and linguistic modeling into one.

Another type of PEKD information is a personal acoustic model. A personal acoustic model enables a system to adapt speech recognition for better accuracy given users' voices, accents, and even their typical stationary noises. Personal acoustic models may be represented as an adaptation layer within a neural network acoustic model, a neural model trained by transfer learning from a more general model, or as a voice acoustic embedding vector that can be used as an input to an acoustic model along with mel filter bank or other spectral representations of sampled audio processed by a speech recognition acoustic front-end.

Another type of PEKD information is a personal statistical language model (SLM). This useful for adapting speech recognition for better accuracy given users' different typical usage of words and phrases and a sets of personal vocabulary words such as names of related people. As with a personal acoustic model, a personal SLM may be represented as an adaptation layer within a neural SLM, a neural model trained by transfer learning from a more general model, or as a linguistic embedding vector that can be used as an input to an SLM along with phonetic or other tokenized model inputs.

Personalized acoustic models and SLMs improve ASR accuracy, increasing user experience, retention, and user discovery of data sources, products, and engagement with advertisements. All of these provide additional revenue opportunities to members of the voice ecosystem.

### Voice fingerprints

Another type of PEKD information is one or more recordings of the user's voice, one or more voice fingerprints extracted from recordings, or both. Voice fingerprints have various uses such as authentication of the user, diarization within multi-user conversations, and keying the customization of virtual assistants. A virtual assistant keyed to a voice fingerprint can automatically respond to one user differently from another by following a mapping from the best match of a real-time computed fingerprint to a PEKD and, from there, accessing user-specific information pointed to by the PEKD

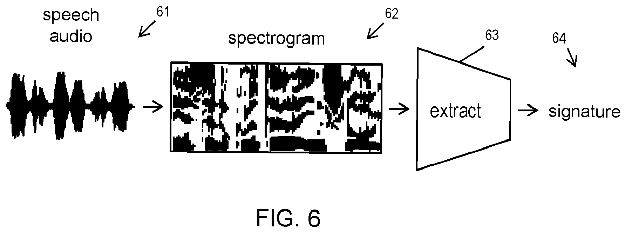

FIG. 6 shows a diagram of one method of voice fingerprinting. Speech audio 61 is captured from a microphone or received over a network connection. Processing can occur locally within a device having a microphone or remotely, such as in a cloud data center server. Windows of speech audio, with a size of approximately 25 milliseconds, is processed on a per-frame basis at a rate of about 10 milliseconds per frame. For each frame, spectral energy is estimated for a number of frequency ranges, such as 40 to 80 ranges, on a mel scale. The sequence of computed mel scale measurements produces a spectrogram 62. A neural network 63 trained to convert sequences of speech audio to vectors processes the spectrogram to produce a voice feature vector, which is a signature 64 of the speaker's voice. Some systems may use a neural network trained directly on sampled speech audio without computing a spectrogram.

The vectors may be computed by different hidden Markov model (HMM) or neural approaches to produce, for example, i-vectors, x-vectors, or d-vectors. The produced vectors may represent voices within a multi-dimensional space having dimensions learned according to a voice feature embedding.

Accuracy of the voice vector signature generally improves with a longer amount of speech or phrase length. It can be phrase-dependent, such as when speaking a specific wake phrase or wake phrase prefix. It can also be phrase independent, in which case it is computed regardless of the words. Phrase-dependent voice fingerprinting is generally more accurate for less speech audio, whereas phrase-independent fingerprinting can take advantage of longer pieces of speech audio when available.

Some voice fingerprinting methods are language-dependent. Language-dependent methods are generally more accurate but require separately trained models for each language such as English, Mandarin, German, Japanese, French, or Korean. Language-independent voice fingerprinting is also possible. It only requires training a single model for all human voices but is less accurate for short phrase lengths.

Authentication by voice fingerprint requires an appropriate enrollment procedure. During operation, a VVS captures voice and computes fingerprints. It compares the computed fingerprint to a fingerprint associated with an asserted user identity. To support this, it's necessary to capture the user's voice. Either the voice must be stored or a fingerprint of the voice within the same vector space as the voice fingerprint computed during regular operation. Storing the enrollment voice recording allows for retraining the system in an improved embedding space and recomputing the user's profile fingerprint as technology or system resources improve in the future.

During enrollment, an amount of speech must be captured that provides enough information for accurate fingerprint comparison. For a personalized wake phrase in a phrase-dependent voice fingerprinting system, typically, it would be sufficient for a user to speak the wake phrase three times. More is better in order to capture variations in the user's voice. For phrase-independent voice fingerprinting, 10 seconds or more of speech audio is usually desirable for accurate fingerprint-based authentication.

The open-source Kaldi package for voice processing is one example of a software package that can support voice fingerprinting among its many voice processing capabilities. Neural models used for fingerprinting may include convolutional neural network (CNN) layers with maxpooling between layers, combined with one or more recurrent layers and a linear attention model.

Unlike call center voice fingerprinting, which requires manual dialing and operates in the limited environment of a telephone system, voice fingerprinting for an interconnected VVS enables a fully voice-based user interface with robustness to different noise environments and device audio component distortions, sampling rates and accuracies, and network connectivity latencies and bandwidth limitations.

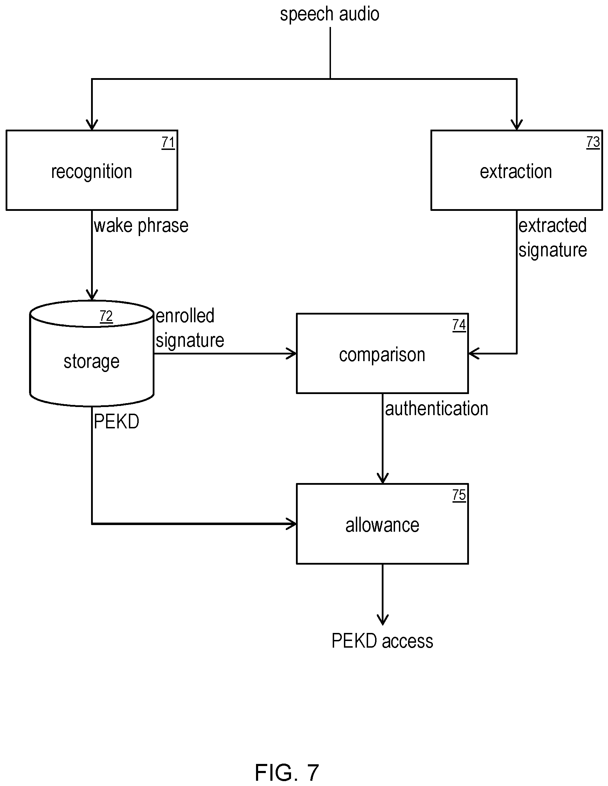

FIG. 7 shows a process that combines the identification of a unique wake phrase with voice fingerprinting to provide strong authentication. ASR performs recognition of speech audio 71. Recognition may occur locally on a device with text sent to the VVS or performed in the VVS on audio sent from a device. The recognition detects a wake phrase and performs a real-time search in a stored database 72 of user-unique wake phrases. The database includes, associated with each unique wake phrase, one or more voice signatures captured during enrollment, and connections to corresponding PEKD data.

A voice fingerprinting model, such as the neural model 63 described above, performs extraction 73 of a voice fingerprint as a feature vector of the captured speech audio. The fingerprint computation can occur in the device with the fingerprint vector transmitted to the WS, or the computation can occur directly within the WS.

Next, the VVS performs a comparison 74 between the extracted signature and the one or more enrolled signatures. The VVS can do comparison by computing a cosine distance between vectors or by other multi-dimensional feature comparison algorithms. If the features match within a threshold of acceptable similarity, the user's voice is verified and authentication provided. Once authentication is successful, the VVS allows access 75 to the user's PEKD. The VVS may be separate from the provider of the PEKD database. If so, allowance is signaled to the database provider to provide access.

If the comparison of voice does not meet the threshold for similarity, the authentication fails, and the VVS signals the device that there was no fingerprint match. The device may respond appropriately to the user, such as by giving an error message, asking the user to retry, signaling the database to be locked due to attempted unauthorized access, or other appropriate actions.

The combination of unique wake phrase recognition and voice fingerprint authentication provides the convenience that enables users to have device-independent ambient virtual assistants while providing enough security for users to trust the storage of sensitive information. This convenience enables financial services, health services, and other personal services that would not otherwise be possible.

### POS scenario

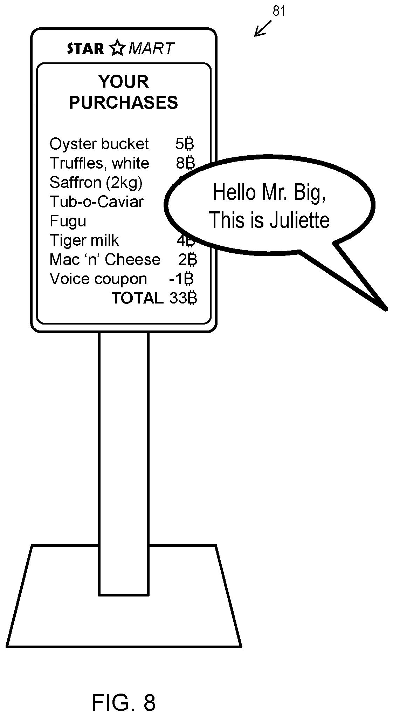

The approach of an interconnected VVS has broad applications. FIG. 8 shows one example. A touch-less, voice-enabled POS system in a supermarket 81 tallies purchased items in a user's bag or cart. Such automated tallying is possible with various detection approaches such as RFID tags on products or machine vision cameras that observe shoppers picking products from shelves.

When the user comes to the POS device to checkout and pay, rather than inserting a card into the POS device, tapping a phone, or scanning a QR code, which require setting down bags to use hands, the shopper can simply utter their individual wake phrase to the POS system, "Hello Mr. Big, This is Juliette." The POS device is connected to the VVS over the internet. The POS device sends the personal wake phrase "Hello Mr. Big, This is Juliette" to the WS. The VVS uses the wake phrase to confirm the identity of the shopper and perform voice fingerprint authentication. Upon successful authentication, the VVS signals the user's bank to provide payment to the POS system. This can be direct, or the VVS can give a key that enables the POS to gain access to certain financial information stored in the shopper's PEKD, such as an account number. In this way, the POS system gets confirmation that the shopper has sufficient financial resources to make the purchases.

The POS market is large, in general. Voice-enabled POS devices will require upgrades across the entire range of vendors with checkout devices from grocery stores to restaurants to subway stations. Consumers will demand vendors to provide voice-enabled POS for the great convenience of not having to set down whatever they are holding in their hands, for the ability to avoid germs that would be shared through interfaces with physical contact, and for speed of accessibility. This ecosystem revolution is only possible with the secure authentication methods described.

### Double authentication

A simple VVS may be the target of spoofing attacks. For example, an imposter may record the legitimate user's voice speaking a personal wake phrase. By replaying the recording, a simple VVS would allow the imposter to access the user's PEKD. Some systems prevent this by double authentication. One form of double authentication is to challenge users to say an unpredictable word or phrase. An imposter would not have a recording of the legitimate user saying the word or phrase and, therefore, would not gain access. Supporting this requires an enrollment process that asks the user to speak extra words.

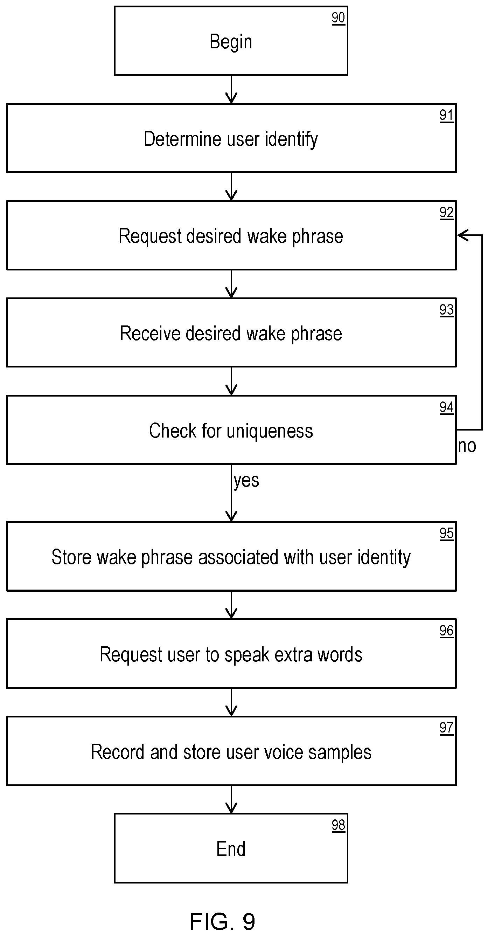

FIG. 9 shows one possible method of enrollment with support for double authentication. It builds on the method shown in FIG. 5. Specifically, the method starts 90 by determining a user identity 91. A user identity may be provided by entering their email address by a keyboard, by a user speaking their government identification number, or by a user scanning a badge with an optical or magnetic scanner. Next, the system requests, from the new user, their desired wake phrase 92. The system then receives the user's desired wake phrase 93, such as "Hello Mr. Big, This is Juliette". The wake phrase can be provided by a text input method such as typing or a speech input method such as automatic speech recognition (ASR). The VVS stores a database of all users' personal wake phrases. It proceeds to search for the user's desired wake phrase in the database to confirm that it cannot be found and is, therefore, a unique wake phrase 94. If not, the VVS returns to the step of requesting a desired wake phrase 92. If the wake phrase is unique, the VVS proceeds to store the wake phrase in association with the user identity in a database 95.

The VVS enrollment process proceeds to pseudorandomly choose or create a set of extra words or phrases such as "Penelope" "Encyclopedia" "Avenue" and "Fifty-Three". The VVS then requests the user to speak each of the extra words or phrases 96. The VVS records and stores samples of the user speaking the phrases 97. The VVS can, optionally, compute and store phrase-dependent voice verification vectors for each extra word or phrase. That completes wake phrase enrollment 98.

In the POS scenario, during authentication, after the VVS has determined the identity of the shopper through the wake phrase, the VVS pushes one of the randomly selected authentication words (or sequence of words, such as digits, that can be easily recognized using speech recognition) to the POS system. The POS system displays the authentication words on a display screen. The user then reads and speaks the authentication words. The POS system sends the authentication words to the VVS. The VVS checks the authentication word against the fingerprints of the authentication word stored in its memory. If there is a match, the VVS will confirm the identity to the POS system. If there is not a match, the POS system will reject the user.

Using double authentication greatly reduces or eliminates fraud.

To double authenticate by a personal device, such as a smartphone, a VVS can push a confirmation code as a sequence of numbers or letters and numbers to the shopper's personal device. The user can read the code. By using phrase-independent speech recognition, as long as the code is long enough to cause the user to provide a sufficiently long voice sample, an imposter cannot play a recording.

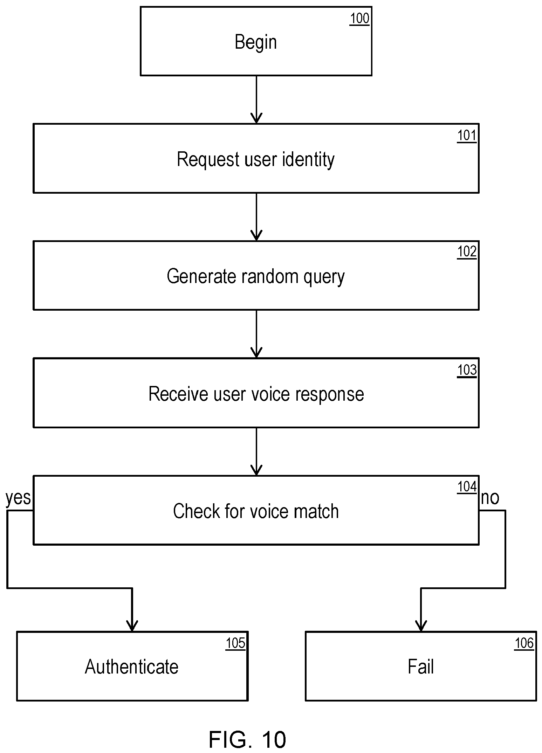

FIG. 10 shows a method of phrase independent authentication by a VVS. It beings 100 by requesting a user identity 101. The user can provide his/her identity by providing uniquely identifying information such as an email address, identity card number, or unique wake phrase. Next, the VVS generates a random simple voice query 102, such as "what is two times two", "please say the word dragon", or "what is your zip code". By making sure the answer to the question is random, the VVS can deal with the danger of an imposter using recorded audio. The VVS proceeds to receive the user voice response 103 and perform a voice match 104. If the match is within a threshold distance, then the user is authenticated 105. Otherwise, the authentication fails 106, and the VVS sends a corresponding signal to the device requesting the authentication.

This particular form of double authentication does not require push notification.

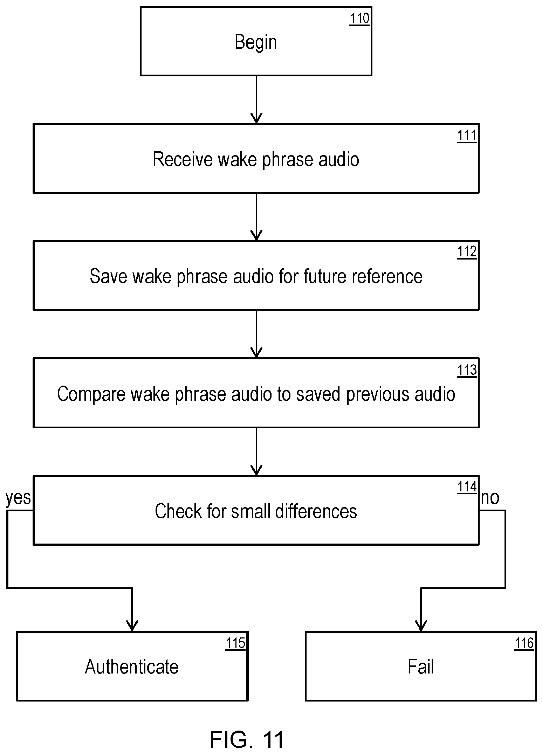

Another form of double authentication that frustrates spoofing by playback of voice recordings is to check for small variations in voice recordings. FIG. 11 shows such a method. It begins 110 by receiving wake phrase audio 111. The VVS then saves the wake phrase audio for future reference 112. Next, the VVS compares the received wake phrase audio to saved previous audio samples 113. This comparison can be made by comparing fingerprints computed on the wake phrase audio samples and checking that they are within a less than a threshold needed to confirm that same user but greater than a threshold that would indicate an identical recording. Since multiple recordings may produce very close fingerprints, it is also possible to consider the length of wake phrase audio or, by stretching the audio samples to a matching length, compute cumulative vector distances of small audio segments throughout the wake phrase audio. After performing the check for sufficient differences 114 between wake phrase audio samples, if the distances are sufficient, the user is authenticated 115. Otherwise, the authentication fails 116, and the VVS sends a corresponding signal to the device requesting the authentication

With this method, the same recording of a user's voice by an imposter cannot be used repeatedly to break the system.

As a further security feature to identify spoofing attacks where an imposter has recorded the legitimate user's voice, the VVS may further employ a voice verification module capable of distinguishing live audio from recorded audio. In particular, various acoustic differences exist between audio received from a live person (referred to herein as live audio) and audio reproduced from a recorded device (referred to herein as reproduced audio). The verification module may operate according to any of a wide variety of technologies for detecting these differences between live and reproduced audio.

In one embodiment, the voice verification module may detect the presence of so-called pop noise, which is a distortion in an audio waveform that happens when human breath reaches a microphone. This same distortion phenomena does not happen in reproduced audio. Methods of detecting differences between live audio and reproduced audio using pop noise are described for example in a published paper by Shioto et al., entitled, "Voice Liveness Detection Algorithms Based on Pop Noise Caused by Human Breath for Automatic Speaker Verification," Interspeech, 2015, which publication is incorporated by reference here in its entirety. By detecting the presence or absence of pop noise, the voice verification module may discern whether audio is live audio from a live user or reproduced audio from playing device 102. The voice verification module may operate according to other technologies in further embodiments.

### The vending machine scenario

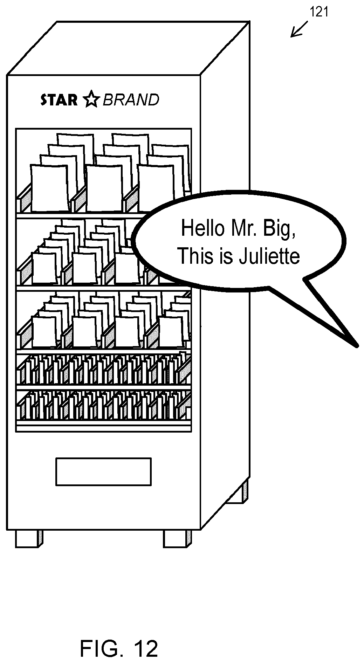

FIG. 12 shows another scenario. A voice-enabled vending machine 121 receives Juliette's speech. She says, "Hello Mr. Big. This is Juliette." The Vending Machine connects to the WS. Verifies Juliette's identity. The Vending Machine then gains access to certain financial information stored in Juliette's PEKD. The Vending Machine allows Juliette to make a purchase.

### The building security scenario

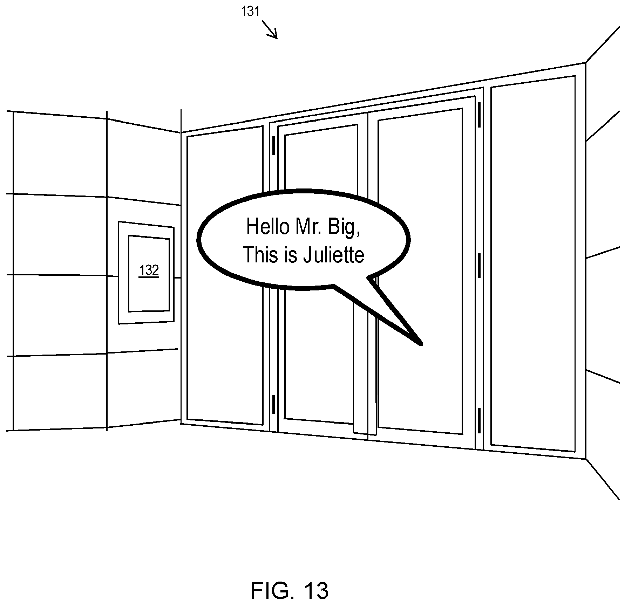

FIG. 13 shows another scenario. Consider a voice-powered lock/security system for a commercial building. Dave walks up to the building. Dave is an imposter who does not have permission to enter the building. Dave knows Juliette works at the building. Dave utters the phrase, "Hello Mr. Big. This is Juliette." The voice-powered lock/security system sends the wake phrase to the WS. The VVS checks the wake phrase against the stored fingerprints and recognizes that this is not a match. The VVS signals a failed authentication. Dave is not granted access to the building. Now Juliette walks up to the building. Juliette utters the wake phrase, "Hello Mr. Big. This is Juliette." The VVS recognizes Juliette's voice and grants Juliette access to the building.

### Edge processing

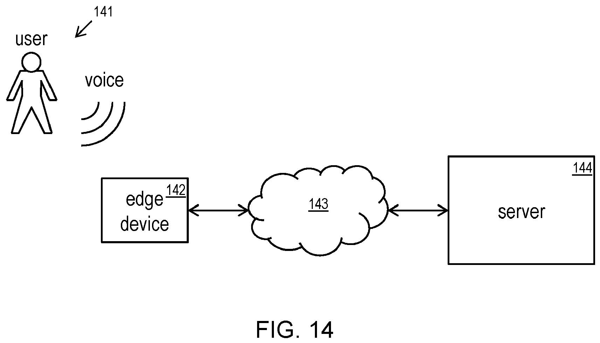

FIG. 14 shows another example configuration. A user 141 interacts by voice with an edge device 142 that stores known users' wake phrases locally as text. Whenever a new user is registered, or a user changes wake phrase, the system pushes the new wake phrase to every device that the user might use, including the edge device 142.

During regular operation, it saves audio in a buffer. It also performs continuous speaker-independent ASR and comparison of transcribed words to wake phrase text. Upon finding a match between spoken words and any user's wake phrase, the edge device sends the buffered audio and either the wake phrase text or a corresponding identifier through a network 143 such as the internet to a VVS server 144. The VVS looks up a user voice fingerprint corresponding to the wake phrase or identifier from a database and compares the audio to the stored fingerprint. The VVS sends an acceptance or rejection response to the device. The device uses the response to perform an application-specific function, such as unlocking the door for successful authentication or triggering an alarm for an authentication failure.

In another example configuration, the edge device sends audio continuously to a WS, which does the speech recognition. This approach provides for higher accuracy and continuously improving server-based ASR. It also avoids the need for sending wake phrase updates to the device.

In another example configuration, the device performs voice activity detection and sends audio to the VVS when it detects voice. This approach avoids possible high network bandwidth requirements of continuous audio streaming.

Devices can use any combination of other sensors such as visual signals, infrared signals, ultrasonic signals, or RFID signals to detect the presence of a user, possibly combined with audio signals.

### Database management

It would be an inefficient use of expertise for every product vendor to design and implement their own virtual assistant (VA). VA platforms, such as Houndify by SoundHound, have developed to meet the needs for full-featured VA capabilities in many internet-connected products. They enable products to provide a user interface that the user associates with the product or its brand, possibly without knowledge that a platform server provides the VA. These services support speech interfaces, other modes of user interfaces, or combinations of modes.

VAs are much more useful to their users when the VA uses PEKD information such as audio of their past queries, text transcriptions of those queries, their address book, location history, and scores of their virtual blackjack games. Some server-based VAs collect and store that information and use it to improve the user experience.

However, some users wish to remove their PEKD from the VA servers or obtain a copy of their PEKD. Users may make requests for deleting or requests for obtaining copies of their PEKD. Although the VA platform collects information, users make their requests to the product vendor. The product vendor needs a way to make a corresponding request to the VA platform to delete or request a copy of at least a portion of the user data.

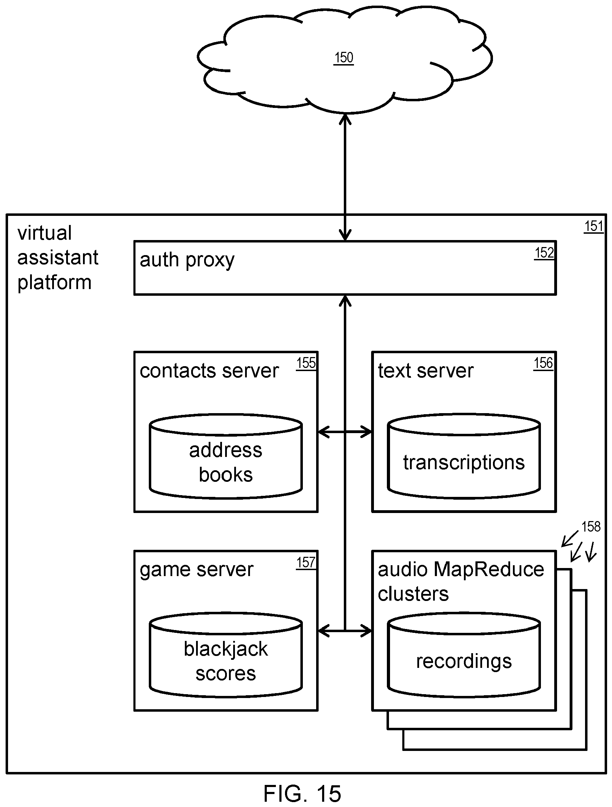

FIG. 15 shows a VA platform 151 that comprises multiple servers dedicated to different purposes. It receives requests from a network 150, such as the internet. An authorization proxy (auth proxy) 152 confirms authorization. The authorization may come from a VVS or other verification systems. In this example system, a contacts server 155 stores user address book information, a text server 156 stores transcriptions of user speech and writings, a game server 157 stores scores of blackjack games and other games, and a system of parallel audio servers 158 stores recordings of user speech. Virtual assistant platforms that capture speech recordings of many users may need to distribute the storage and processing of audio recordings. Distributing storage has the benefit of distributing the data access, which limits bandwidth requirements and improves the latency and, therefore, system responsiveness by keeping users data closer to them, topologically, within the network. The parallel audio servers use MapReduce clusters of storage. This can be implemented with open protocols such as Apache Hadoop or cloud-service-specific protocols.

Such VA platforms may provide an API that provides for DELETE and GET requests. The auth proxy interface receives the DELETE and GET requests, and an optional indication of a data type, from the external network. If the request is authorized, the auth proxy forwards them DELETE or GET requests to the appropriate server. If no data type is specified, the auth proxy may forward the request to all servers. This way, the VA platforms may use a distributed request architecture for the auth proxy to carry out DELETE and GET requests across all servers.

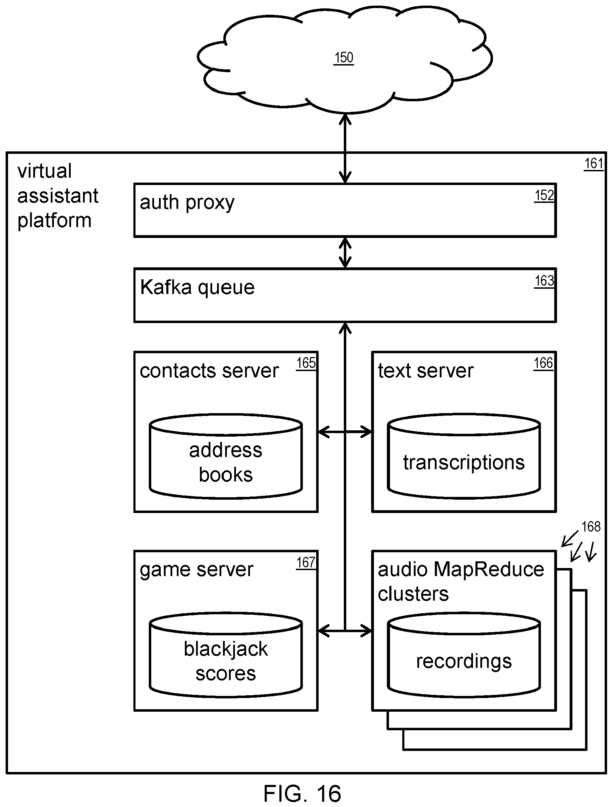

FIG. 16 shows another implementation of a virtual assistant platform 161. DELETE and GET requests from the network 150 go to an auth proxy 152. It checks authorization. If denied, the auth proxy responds with an error signal. If authorization is confirmed, the auth proxy sends the requests to an open-source Kafka queue having GET and DELETE user data request topics. Other open-source or proprietary queuing systems are appropriate for integration into different systems. Any server that stores user data, such as a contact server 165, text server 166, game server 167, and servers within a system of parallel audio MapReduce clusters 168, must subscribe to the get and delete user data request topics, with their own unique group ID. The auth proxy subscribes to Kafka. After processing DELETE or GET requests, each server posts a confirmation record to Kafka. If a server has user data, it posts it as a result of the GET requests via the auth proxy API. The auth proxy keeps track of DELETE and GET request progress and provides an API to report request status.

Some servers, especially ones that handle storage of large amounts of data, may use a distributed array of MapReduce clusters that communicate through a framework such as Apache Hadoop. Such servers must handle the distribution of deletion requests in response to DELETE API requests through the auth proxy.

An auth proxy API may require a mutual authentication protocol, such as Mutual Transport Layer Security (mTLS), with requesters. Other standard or proprietary mutual authentication protocols are appropriate for different systems.

### Boilerplate

### Computer-readable media

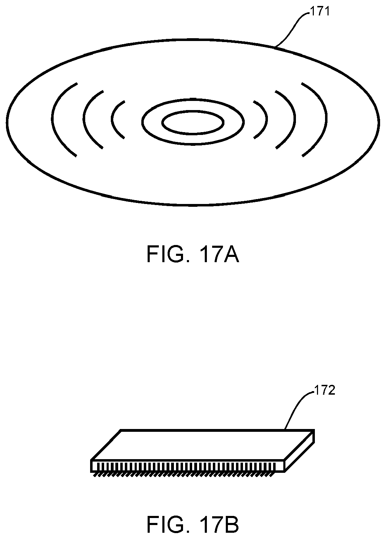

Figure 17A shows an example of a non-transitory computer readable medium 171 that is a rotating magnetic disk. Data centers commonly use magnetic disks to store data and code comprising instructions for server processors. Non-transitory computer readable medium 171 stores code comprising instructions that, if executed by one or more computers, would cause the computer to perform steps of methods described herein. Rotating optical disks and other mechanically moving storage media are possible.

Figure 17B shows an example of a non-transitory computer readable medium 172 that is a Flash random access memory (RAM) chip. Data centers commonly use Flash memory to store data and code for server processors. Mobile devices commonly use Flash memory to store data and code for processors within system-on-chip devices. Non-transitory computer readable medium 172 stores code comprising instructions that, if executed by one or more computers, would cause the computer to perform steps of methods described herein. Other non-moving storage media packaged with leads or solder balls are possible.

### Systems-on-chip

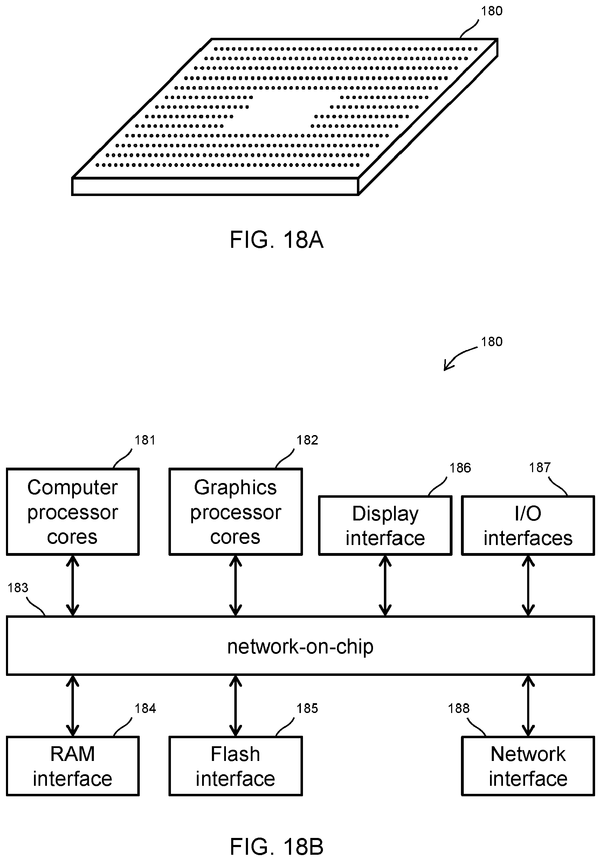

FIG. 18A shows the bottom side of a packaged system-on-chip device 180 with a ball grid array for surface-mount soldering to a printed circuit board. Various package shapes and sizes are possible for various chip implementations. System-on-chip (SoC) devices control many embedded systems and IoT device embodiments as described herein.

FIG. 18B shows a block diagram of the system-on-chip 180. It comprises a multicore cluster of computer processor (CPU) cores 181 and a multicore cluster of graphics processor (GPU) cores 182. The processors connect through a network-on-chip 183 to an off-chip dynamic random access memory (DRAM) interface 184 for volatile program and data storage and a Flash interface 185 for non-volatile storage of computer program code in a Flash RAM non-transitory computer readable medium. SoC 180 also has a display interface 186 for displaying a GUI and an I/O interface module 187 for connecting to various I/O interface devices, as needed for different peripheral devices. The I/O interface enables sensors such as touch screen sensors, geolocation receivers, microphones, speakers, Bluetooth peripherals, and USB devices, such as keyboards and mice, among others. SoC 180 also comprises a network interface 188 to allow the processors to access the Internet through wired or wireless connections such as WiFi, 3G, 4G long-term evolution (LTE), 5G, and other wireless interface standard radios as well as Ethernet connection hardware. By executing instructions stored in RAM devices through interface 184 or Flash devices through interface 185, the CPUs 181 and GPUs 182 perform steps of methods s described herein.

### Servers

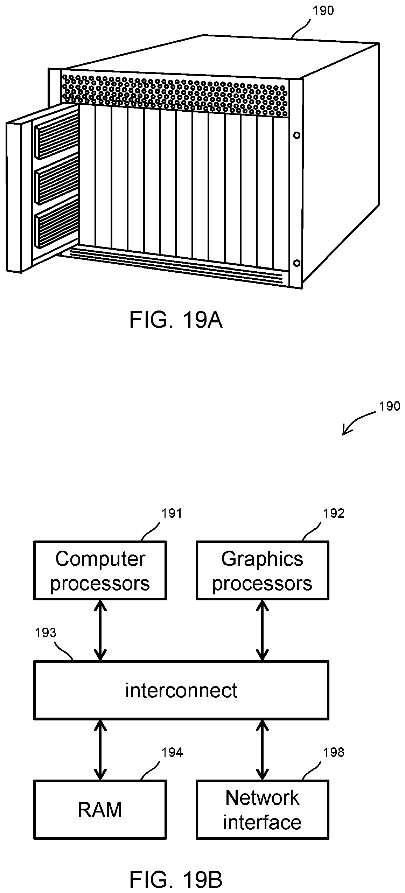

FIG. 19A shows a rack-mounted server blade multi-processor server system 190 according to some embodiments. Server system 190 comprises a multiplicity of network-connected computer processors that run software in parallel.

FIG. 19B shows a block diagram of the server system 190. It comprises a multicore cluster of computer processor (CPU) cores 191 and a multicore cluster of graphics processor (GPU) cores 192. The processors connect through a board-level interconnect 193 to random-access memory (RAM) devices 194 for program code and data storage. Server system 190 also comprises a network interface 198 to allow the processors to access the Internet. By executing instructions stored in RAM devices 194, the CPUs 191 and GPUs 192 perform steps of methods as described herein.

### Special notices

Examples shown and described use certain spoken languages. Various embodiments operate, similarly, for other languages or combinations of languages. Examples shown and described use certain domains of knowledge and capabilities. Various systems operate similarly for other domains or combinations of domains.

Some systems are screenless, such as an earpiece, which has no display screen. Some systems are stationary, such as a vending machine. Some systems are mobile, such as an automobile. Some systems are portable, such as a mobile phone. Some systems are for implanting in a human body. Some systems comprise manual interfaces such as keyboards or touchscreens.

Some systems function by running software on general-purpose programmable processors (CPUs) such as ones with ARM or x86 architectures. Some power-sensitive systems and some systems that require especially high performance, such as ones for neural network algorithms, use hardware optimizations. Some systems use application-customizable processors with configurable instruction sets in specialized systems-on-chip, such as ARC processors from Synopsys and Xtensa processors from Cadence. Some systems use dedicated hardware blocks burned into field-programmable gate arrays (FPGAs). Some systems use arrays of graphics processing units (GPUs). Some systems use application-specific-integrated circuits (ASICs) with customized logic to give higher performance.

Some systems of physical machines described and claimed herein are programmable in numerous variables, combinations of which provide essentially an infinite variety of operating behaviors. Some systems herein are configured by software tools that provide numerous parameters, combinations of which provide for essentially an infinite variety of machine embodiments.

Hardware blocks, custom processor instructions, co-processors, and hardware accelerators perform neural network processing or parts of neural network processing algorithms with particularly high performance and power efficiency. This provides extended battery life for battery-powered devices and reduces heat removal costs in data centers that serve many client devices simultaneously.

The disclosure comprises the following items:
1. A system for authenticating users by voice, the system comprising:
   a personal data service provider comprising:
      a personal database comprising:
      a plurality of users' personal data,
   wherein the personal data service provider is capable of communicating over one or more networks with a first commercial provider and a second commercial provider;
   wherein the first commercial provider is associated with a first voice enabled device and the second commercial provider is associated with a second voice enabled device; and
   wherein the personal data service provider is capable of granting, to the first commercial provider, access to at least a portion of a user's personal data as a result of a voice verification server authenticating the user using the first voice enabled device and is capable of granting, to the second commercial provider, access to at least a portion of the user's personal data as a result of the voice verification server authenticating the user using the second voice enabled device.
2. The system of item 1 wherein users' personal data is stored in a public distributed ledger.
3. The system of item 1, wherein users' personal data is stored in a database.
4. The system of item 1, wherein authentication by the voice verification server includes computation of a voice feature vector in a machine learned embedding space.
5. The system of item 1, wherein authentication by the voice verification server includes recognizing a wake phrase that is specific to the user.
6. The system of item 1, wherein the system is distributed.
7. A voice authentication and voice enabled device comprising:
   a microphone capable of receiving a voice query from a user; and
   a network connection,
   wherein the voice authentication and voice enabled device is capable of sending the voice query to a voice verification server; and
   wherein the voice authentication and voice enabled device is capable of receiving at least a portion of the user's personal data in response to a data service provider granting access in response to authentication by the voice verification server.
8. The device of item 7 wherein the portion of the user's personal data is received from a public distributed ledger.
9. The device of item 7 wherein the portion of the user's personal data is received from a database.
10. The device of item 7 wherein the voice authentication and voice enabled device sends the voice query to the voice verification server in response to recognizing a wake phrase.
11. A computer implemented method for identifying a user by voice, the method comprising:
   receiving a request from a first voice enabled device for access to at least a portion of a user's personal data, the request comprising a first voice query from the user;
   sending the first voice query to a voice verification server;
   receiving a first authentication message from the voice verification server;
   sending the portion of the user's personal data to the first voice enabled device;
   receiving a request from a second voice enabled device for access to at least a portion of the user's personal data, the request comprising a second voice query from the user;
   sending the second voice query to the voice verification server;
   receiving a second authentication message from the voice verification server; and
   sending the the portion of the user's personal data to the second voice enabled device.
12. The method of item 11 wherein users' personal data is stored in a public distributed ledger.
13. The method of item 11 wherein users' personal data is stored in a database.
14. The method of item 11, further comprising:
   recognizing, in the first voice query, a wake phrase that is specific to the user, wherein sending the first voice query to the voice verification server is performed in response to recognizing the wake phrase that is specific to the user; and
   recognizing, in the second voice query, the wake phrase that is specific to the user, wherein sending the second voice query to the voice verification server is performed in response to recognizing the wake phrase that is specific to the user.
15. A computer-implemented method for authenticating a user by voice, the method comprising:
   receiving a first voice query from a personal data service provider;
   authenticating a user based on the first voice query;
   sending a first authentication message to the personal data service provider;
   receiving a second voice query from the personal data service provider;
   authenticating the user based on the second voice query; and
   sending a second authentication message to the personal data service provider,
   wherein the first authentication message grants, to a first commercial provider, access to at least a portion of the user's personal data and the second authentication message grants, to a second commercial provider, access to at least a portion of the user's personal data.
16. The method of item 15 wherein authenticating a user comprises:
   computation of a voice feature vector in a machine learned embedding space; and
   comparison of the voice feature vector in a machine learned embedding space to user-specific voice feature vectors in a database.
17. The method of item 15 wherein authenticating a user comprises:
   recognizing, in the first voice query, a wake phrase that is specific to the user, wherein authenticating the user is performed in response to recognizing the wake phrase that is specific to the user; and
   recognizing, in the second voice query, the wake phrase that is specific to the user, wherein authenticating the user is performed in response to recognizing the wake phrase that is specific to the user.
18. The method of item 17 wherein authenticating a user comprises:
   computation of a voice feature vector in a machine learned embedding space; and
   comparison of the voice feature vector in a machine learned embedding space to a user-specific voice feature vector in a database, the user-specific voice feature vector corresponding to a user having the wake phrase.

## Claims

1. A computer-implemented method for authenticating a user by voice, the method comprising:
receiving a first voice query from a personal data service provider;
authenticating a user based on the first voice query;
sending a first authentication message to the personal data service provider;
receiving a second voice query from the personal data service provider;
authenticating a user based on the second voice query; and
sending a second authentication message to the personal data service provider,
wherein the first authentication message grants, to a first third-party provider, access to at least a portion of the user's personal data and the second authentication message grants, to a second third-party provider, access to at least a portion of the user's personal data.

2. The method of claim 1, wherein authenticating a user comprises:
computation of a voice feature vector in a machine learned embedding space; and
comparison of the voice feature vector in the machine learned embedding space to user-specific voice feature vectors in a database.

3. The method of claim 1 or 2, wherein authenticating a user comprises:
recognizing, in the first voice query, a wake phrase that is specific to the user, wherein authenticating the user is performed in response to recognizing the wake phrase that is specific to the user; and
recognizing, in the second voice query, the wake phrase that is specific to the user, wherein authenticating the user is performed in response to recognizing the wake phrase that is specific to the user.

4. The method of claim 3, wherein authenticating a user comprises:
computation of a voice feature vector in a machine learned embedding space; and
comparison of the voice feature vector in the machine learned embedding space to a user-specific voice feature vector in a database, the user-specific voice feature vector corresponding to a user having the wake phrase.

5. A system for authenticating users by voice, the system comprising:
a personal data service provider comprising:
a personal database comprising:
a plurality of users' personal data,
wherein the personal data service provider is configured to communicate over one or more networks with a first third-party provider and a second third-party provider;
wherein the first third-party provider is associated with a first voice enabled device and the second third-party provider is associated with a second voice enabled device; and
wherein the personal data service provider is configured to grant, to the first third-party provider, access to at least a portion of a user's personal data as a result of a voice verification server authenticating the user using the first voice enabled device, and is configured to grant, to the second third-party provider, access to at least a portion of the user's personal data as a result of the voice verification server authenticating the user using the second voice enabled device.

6. The system of claim 5, wherein the users' personal data is stored in a public distributed ledger.

7. The system of claim 5, wherein the users' personal data is stored in a database.

8. The system of any of claims 5-7, wherein authentication by the voice verification server includes computation of a voice feature vector in a machine learned embedding space.

9. The system of any of claims 5-8, wherein authentication by the voice verification server includes recognizing a wake phrase that is specific to the user.

10. The system of any of claims 5-9, wherein the system is distributed.

11. A voice authentication and voice enabled device comprising:
a microphone configured to receive a voice query from a user;
wherein the voice authentication and voice enabled device is configured to send the voice query to a voice verification server; and
wherein the voice authentication and voice enabled device is configured to receive at least a portion of the user's personal data in response to a data service provider granting access in response to authentication by the voice verification server.

12. The device of claim 11, wherein the portion of the user's personal data is received from a public distributed ledger.

13. The device of claim 11, wherein the portion of the user's personal data is received from a database.

14. The device of any of claims 11-13, wherein the voice authentication and voice enabled device is configured to send the voice query to the voice verification server in response to recognizing a wake phrase.
